(19) Europäisches Patentamt
European Patent Office
Office européen des brevets

(11) EP 4 159 813 A1

# (12) EUROPEAN PATENT APPLICATION

published in accordance with Art. 153(4) EPC

(43) Date of publication:
**05.04.2023 Bulletin 2023/14**

(21) Application number: **21817932.3**

(22) Date of filing: **01.06.2021**

(51) International Patent Classification (IPC):
***C08L 83/04*** *(2006.01)* ***C08K 3/04*** *(2006.01)*
***C08K 3/11*** *(2018.01)* ***C08K 3/22*** *(2006.01)*
***C08K 5/541*** *(2006.01)* ***C08L 83/06*** *(2006.01)*
***C08L 83/07*** *(2006.01)* ***C09D 7/61*** *(2018.01)*
***C09D 7/63*** *(2018.01)* ***C09D 183/05*** *(2006.01)*
***C09D 183/07*** *(2006.01)*

(52) Cooperative Patent Classification (CPC):
**C08K 3/04; C08K 3/11; C08K 3/22; C08K 5/541; C08L 83/04; C08L 83/06; C09D 7/61; C09D 7/63; C09D 183/04**

(86) International application number:
**PCT/JP2021/020781**

(87) International publication number:
**WO 2021/246386 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2020 JP 2020095482**

(71) Applicant: **Momentive Performance Materials Japan LLC**
**Tokyo 107-6119 (JP)**

(72) Inventors:
- **IIDA Isao**
  **Tokyo 107-6119 (JP)**
- **ONO Kazuhisa**
  **Tokyo 107-6119 (JP)**
- **MIYATA Koji**
  **Tokyo 107-6119 (JP)**

(74) Representative: **Müller-Boré & Partner Patentanwälte PartG mbB**
**Friedenheimer Brücke 21**
**80639 München (DE)**

## (54) CURABLE POLYORGANOSILOXANE COMPOSITION AND ELECTRONIC COMPONENT

(57) A curable polyorganosiloxane composition comprising: (a) a polyorganosiloxane having two or more curable functional groups per molecule; (b) a crosslinking agent having per molecule two or more crosslinkable groups having reactivity with the curable functional group of the component (a); (c) a curing catalyst capable of catalyzing a crosslinking reaction of the component (a) and the component (b); (d) a pigment which itself does not emit a fluorescent light; and (e) a UV tracer. The composition can be used as an adhesive which is advantageous in that it is easy to confirm whether the adhesive has been uniformly applied to a substrate having a color similar to that of the composition.

EP 4 159 813 A1

## Description

### Field of the Invention

The present invention relates to a curable polyorganosiloxane composition which is advantageous in that the state of the composition applied to a substrate can be easily checked. In addition, the present invention also relates to a method for checking the state of the composition applied to a substrate.

### Background Art

Various types of room temperature curing polyorganosiloxane compositions that are cured at room temperature to form an elastomer have conventionally been known. The compositions have application of, for example, a coating material and a potting material for electric and electronic devices, such as an LCD (liquid crystal display). In this application, the composition of a type such that it is in contact with water in air to cause a curing reaction is used, and, when being cured, the composition emits an alcohol or acetone which is less corrosive with respect to metals. Such a composition not only has excellent working properties but also is unlikely to cause corrosion of electrodes and wirings, and further has, for example, excellent adhesive properties. Even when parts require the composition to have light screen properties and hiding properties, the composition can deal with the requirements by adding a pigment, and thus the polyorganosiloxane composition is generally used for such parts (for example, Japanese Unexamined Patent Publication No. 2007-169356). On the other hand, with respect to the adhesive using the polyorganosiloxane composition, from the viewpoint of the operation properties and deep-portion curing properties, the adhesive can be in the form of a two-part type such that the composition is divided into two parts, i.e., a base material and a curing agent and they are mixed together just before used.

In bonding a substrate using a polyorganosiloxane composition, for surely obtaining bonding strength and reliability, it is necessary that the polyorganosiloxane composition as an adhesive uniformly exhibit adhesive force with respect to the substrate. In the case of a two-part type composition comprising a base material and a curing agent, for exhibiting uniform adhesive force, the base material and the curing agent must be uniformly mixed before being applied to a substrate, and therefore a method for checking the state of the mixed base material and curing agent is studied (Japanese Unexamined Patent Publication No. 2019-143074).

### PRIOR ART REFERENCES

#### Patent Documents

Patent document 1: Japanese Unexamined Patent Publication No. 2007-169356
Patent document 2: Japanese Unexamined Patent Publication No. 2019-143074

### Summary of the Invention

#### Problems to be Solved by the Invention

When the state of the adhesive applied to a substrate can be checked, a risk that defectives are generated due to, for example, lack of the adhesive force can be avoided, and this is an advantageous factor in the production of members, such as electronic parts.

As seen in Japanese Unexamined Patent Publication No. 2007-169356, an adhesive is colored by, for example, incorporating a pigment, and, on the other hand, there are various types and colors of substrates. Depending on the type of the substrate, a silicone adhesive and the substrate have a similar color. When the substrate and the adhesive have a similar color, it is likely that the state of the adhesive applied to the substrate cannot be checked using a visible light. When it is impossible to confirm whether the adhesive has been uniformly applied to the substrate, bonding to the substrate could result in incomplete, which adversely affects the reliability of the products. With respect to a conventional adhesive, when the adhesive having the same color as that of a substrate is applied, it is difficult to confirm whether the adhesive has been appropriately applied to the substrate. The state of the adhesive applied can be checked only when making visual observation for a long time or using an adhesive having a color different from that of a substrate.

The state of the mixed adhesive of a two-part type can be checked by the method of Japanese Unexamined Patent Publication No. 2019-143074, but this method does not confirm whether the adhesive has been uniformly applied, and thus it has been difficult to accurately evaluate the state of the applied adhesive.

## Object of the Invention

An object of the present invention is to provide a colored silicone adhesive which is advantageous in that it is easy to confirm whether the adhesive has been uniformly applied to a substrate having a similar color, and a method for checking the state of the adhesive applied to the substrate.

## Means for Solving the Problems

The present inventors have found that, by using a pigment which itself does not emit a fluorescent light and a UV tracer in combination in the composition, even when the composition is applied to a substrate having a similar color, the state of the composition, which is an adhesive, applied to the substrate can be easily checked using a UV light. Specifically, a main embodiment of the present invention is a curable polyorganosiloxane composition which comprises: (a) a polyorganosiloxane having two or more curable functional groups per molecule; (b) a crosslinking agent having per molecule two or more crosslinkable groups having reactivity with the curable functional group of the component (a); (c) a curing catalyst capable of catalyzing a crosslinking reaction of the component (a) and the component (b); (d) a pigment which itself does not emit a fluorescent light; and (e) a UV tracer. Another embodiment of the present invention is a method for checking the state of the curable polyorganosiloxane composition applied to a substrate, wherein the method comprises the steps of: providing the above-mentioned composition; providing a substrate in which a color difference ($\Delta E$) between the composition and the substrate is 20 or less; applying the composition to the substrate; and irradiating the composition applied to the substrate with an ultraviolet light.

## Effects of the Invention

In the present invention, there is provided an adhesive which is advantageous in that it is easy to confirm whether the adhesive has been uniformly applied to a substrate having a similar color. Further, there is provided a method for checking the state of the adhesive, which is a curable polyorganosiloxane composition, applied to a substrate having a color similar to that of the adhesive.

## Detailed Description of the Invention

Hereinbelow, the composition of the present invention will be described in detail item by item. In the present specification, the range of values indicated using the preposition "to" means a range of values including the respective values shown before and after the preposition "to" as the lower limit and the upper limit.

The term "organic group" used in the present specification means a group containing carbon. The valence of the organic group is expressed by indicating "n-valent" wherein n is an arbitrary natural number. Accordingly, for example, the term "monovalent organic group" means a group containing carbon and having only one bonding site. An element other than carbon may have a bonding site. Even when the valence is not specified, those skilled in the art can grasp an appropriate valence from the context.

The term "hydrocarbon group" used in the present specification means a group containing carbon and hydrogen, which results from elimination of one hydrogen atom from a molecule. With respect to the hydrocarbon group, there is no particular limitation, but examples include hydrocarbon groups having 1 to 20 carbon atoms and being optionally substituted with one or more substituents, such as an aliphatic hydrocarbon group and an aromatic hydrocarbon group. The "aliphatic hydrocarbon group" may be linear, branched, or cyclic, and may be saturated or unsaturated. Further, the hydrocarbon group may contain one or more cyclic structures. The hydrocarbon group may have in the terminals or molecular chain thereof one or more heteroatoms or structures containing a heteroatom, such as a nitrogen atom (N), an oxygen atom (O), a sulfur atom (S), a silicon atom (Si), an amide linkage, a sulfonyl linkage, a siloxane bond, a carbonyl group, or a carbonyloxy group.

With respect to the substituent for the "hydrocarbon group" used in the present specification, there is no particular limitation, but examples include halogen atoms; and groups which are optionally substituted with one or more halogen atoms, and which are selected from a $C_{1-6}$ alkyl group, a $C_{2-6}$ alkenyl group, a $C_{2-6}$ alkynyl group, a $C_{3-10}$ cycloalkyl group, a $C_{3-10}$ unsaturated cycloalkyl group, 5- to 10-membered heterocyclic groups, 5- to 10-membered unsaturated heterocyclic groups, a $C_{6-10}$ aryl group, and 5- to 10-membered heteroaryl groups.

In the present specification, an alkyl group and a phenyl group may be unsubstituted or substituted unless otherwise specified. With respect to the substituent for the above groups, there is no particular limitation, but examples include one or more groups selected from a halogen atom, a $C_{1-6}$ alkyl group, a $C_{2-6}$ alkenyl group, and a $C_{2-6}$ alkynyl group.

[Curable polyorganosiloxane composition]

• Component (a)

The curable polyorganosiloxane composition of the present invention contains, as component (a), at least one polyorganosiloxane having two or more curable functional groups in the molecule thereof. Component (a) functions as a base polymer of the curable polyorganosiloxane composition. The term "curable functional group" indicates a functional group capable of causing a curing reaction. With respect to the mechanism of the curing reaction, there is no particular limitation, and a method generally used for curing a resin can be employed. As a curing reaction, particularly, a condensation reaction or an addition reaction is employed. The curable functional groups contained in the same molecule are desirably the same functional group, but different types of functional groups can be present in the same molecule as long as these functional groups cause a curing reaction of the same type. It is preferred that at least respective curable functional groups are present at both terminals of the molecular main chain of component (a). In the present specification, the molecular main chain of component (a) indicates the relatively longest bonding chain in the molecule of component (a).

With respect to the molecular skeleton of component (a), there is no particular limitation as long as it has a siloxane bond as a main skeleton. The siloxane skeleton may be interrupted by a divalent organic group. In the description of the structure of the siloxane compound, the structural units of the siloxane compound are frequently indicated using the abbreviations shown below. Hereinafter, these structural units are frequently respectively referred to as, for example, "M unit" and "D unit".

M: $-Si(CH_3)_3O_{1/2}$

$M^H$: $-SiH(CH_3)_2O_{1/2}$

$M^{Vi}$: $-Si(CH=CH_2)(CH_3)_2O_{1/2}$

D: $Si(CH_3)_2O_{2/2}$

$D^H$: $SiH(CH_3)O_{2/2}$

T: $Si(CH_3)O_{3/2}$

Q: $SiO_{4/2}$

Hereinafter, in the present specification, the siloxane compound is composed of a combination of the above-mentioned structural units, but may at least partially contain the structural units, of which the methyl group is replaced by another group, e.g., a halogen, such as fluorine, or a hydrocarbon group, such as a phenyl group. Further, for example, when a structure is indicated by $D^H_{20}D_{20}$, it is understood that the indication is not intended to show that 20 $D^H$ units are continuously disposed and then 20 D units are continuously disposed, but shows that the individual units may be arbitrarily arranged. The siloxane compound can have various three-dimensional structures using a T unit or a Q unit. Therefore, component (a) can have an arbitrary molecular skeleton, e.g., a linear, branched, or cyclic structure or a combination of these structures. Component (a) preferably has a linear molecular skeleton.

In an embodiment of the present invention, as an example of component (a), there can be mentioned a linear polyorganosiloxane represented by the following formula (1):

$$(R^a)_{3-p}R_pSi\text{-}O\text{-}(Si(R)_r(R^a)_{2-r}O)_n\text{-}SiR_q(R^a)_{3-q} \cdots \quad (1)$$

wherein:

each $R^a$ is independently a curable functional group,
each R is independently a monovalent organic group,
each of p and q is independently 0, 1, or 2,
each r is independently 0, 1, or 2, and
n is a number such that the viscosity at 23°C is 0.01 to 50 Pa•s.

R preferably has a hydrocarbon group, particularly an alkyl group, an alkenyl group, or an aryl group. From the viewpoint of controlling physical properties, such as a refractive index, at least part of R may be an aryl group, such as a phenyl group, or an alkenyl group, such as a vinyl group. The polyorganosiloxane wherein all R's are methyl is especially

preferably used in view of easy availability. With respect to the position of the curable functional group, preferred is the polyorganosiloxane of the formula (1) wherein r is 2, that is, preferred is the linear polyorganosiloxane in which at least respective curable functional groups are present only at both terminals of the molecule.

(Curable functional group which causes a condensation reaction)

Component (a) has per molecule two or more functional groups which can be used for a curing reaction of a siloxane resin. When classified according to the type of curing reaction, in an embodiment, component (a) can be a polyorganosiloxane having two or more Si atoms bonded to at least one group selected from the group consisting of a hydroxyl group and a hydrolyzable group. In this case, the hydroxyl group and/or hydrolyzable group is a curable functional group corresponding to group $R^a$ in the formula (1) above.
The term "hydrolyzable group" used in the present specification means a group which is capable of undergoing a hydrolysis reaction, that is, means a group which can be eliminated from the main skeleton of a compound due to a hydrolysis reaction. Examples of hydrolyzable groups include -OR', -OCOR', -O-N=CR'$_2$, -NR'$_2$, -NHR', and a halogen atom (wherein R' represents a substituted or unsubstituted alkyl group having 1 to 4 carbon atoms), and preferred is -OR' (i.e., an alkoxy group). Examples of R's include unsubstituted alkyl groups, such as a methyl group, an ethyl group, a propyl group, an isopropyl group, a n-butyl group, and an isobutyl group; and substituted alkyl groups, such as a chloromethyl group. Of these, an alkyl group, particularly an unsubstituted alkyl group is preferred, and a methyl group or an ethyl group is more preferred. With respect to the hydroxyl group, there is no particular limitation, but the hydroxyl group may be one which is formed by hydrolysis of a hydrolyzable group. Examples of halogen atoms include a fluorine atom, a chlorine atom, a bromine atom, and an iodine atom, and, of these, a chlorine atom is preferred.
The polyorganosiloxane having a curable functional group which causes a condensation reaction is preferably the polyorganosiloxane of the formula (1) wherein p and q are 0 or 1, and r is 2, i.e., the polyorganosiloxane having two or three hydrolyzable groups, particularly alkoxy groups only at each molecular terminals, namely, having four or six hydrolyzable groups in total.
With respect to component (a) of a type that causes a condensation reaction, as a preferred example which satisfies the above conditions, there can be mentioned a linear polyorganosiloxane having both terminals blocked by a methyldimethoxysilyl group or a trimethoxysilyl group. As the polyorganosiloxane usable as component (a), a commercially available polyorganosiloxane can be used. A polyorganosiloxane having the curable functional group introduced by a known reaction may be used.

(Curable functional group which causes an addition reaction)

In another embodiment, component (a) can be a compound having two or more Si atoms bonded to an aliphatic unsaturated bond, such as (a)an (meth)acryl group or a vinyl group, which undergoes curing due to an addition reaction, particularly a group having an alkenyl group. The curable functional group which causes an addition reaction is more preferably a vinyl group. In this case, the aliphatic unsaturated group is a curable functional group corresponding to group $R^a$ in the formula (1) above.
The polyorganosiloxane having a curable functional group which causes an addition reaction is preferably the polyorganosiloxane of the formula (1) wherein p and q are 2, and r is 2, i.e., the polyorganosiloxane having one group capable of undergoing an addition reaction, particularly a vinyl group only at each molecular terminals, namely, having two groups capable of undergoing an addition reaction in total.
With respect to component (a) of a type that causes a condensation reaction, as a preferred example which satisfies the above conditions, there can be mentioned a linear polyorganosiloxane having both terminals blocked by a dimethylvinylsilyl group. As the polyorganosiloxane usable as component (a), a commercially available polyorganosiloxane can be used. A polyorganosiloxane having the curable functional group introduced by a known reaction may be used.
With respect to the amount of the component (a) incorporated, there is no particular limitation as long as the curable polyorganosiloxane composition has a viscosity in such a range that the composition can be handled. Based on the amount of component (a), the amounts of the other components incorporated can be appropriately selected within their respective preferred ranges which are individually shown below.

• Component (b)

The crosslinking agent in the curable composition of the present invention has per molecule two or more crosslinkable groups having reactivity with the curable functional group of the above-mentioned component (a) (hereinafter, frequently referred to simply as "component (b)"). By virtue of the crosslinking agent contained, a cured product obtained from the curable composition has excellent physical properties, such as a tensile strength and a modulus. With

respect to the crosslinkable group of component (b), a functional group which is active in a reaction generally used as a curing reaction for silicone can be used, and is determined according to the reactive functional group of component (a). For example, when the reactive functional group of component (a) is a functional group which is capable of undergoing a condensation reaction, such as a hydroxyl group or an alkoxy group, a hydrolyzable group directly bonded to silicon, such as a hydroxyl group or an alkoxy group, can be employed as the crosslinkable group. When the reactive functional group of component (a) is a functional group which is capable of undergoing an addition reaction, such as a vinyl group, a hydrogen atom directly bonded to silicon, i.e., a Si-H group can be employed as the crosslinkable group. The number of the crosslinkable groups of component (b) per molecule is required to be two or more for forming a crosslinked structure between component (a) and component (b), but, for forming a network structure by a crosslinking reaction, the number is preferably three or more. The individual crosslinkable groups may be bonded to the same silicon atom, or may be bonded to different silicon atoms.

Component (b) may be a compound having only one silicon atom, i.e., a derivative of silane, or a compound having two or more silicon atoms. When component (b) is a compound having two or more silicon atoms, component (b) preferably has a structure in which individual silicon atoms are connected through a siloxane bond for crosslinking with oxygen. The molecular skeleton of component (b) containing two or more silicon atoms may be linear, branched, or cyclic.

«Crosslinking agent which causes a condensation type reaction»

When component (a) is a polyorganosiloxane which causes a condensation type reaction, component (b) is a compound having at least two hydroxyl groups or hydrolyzable groups bonded to a Si atom (excluding the compound corresponding to component (a)) or a partial hydrolysis condensation product thereof. Examples of hydrolyzable groups include alkoxy groups, such as a methoxy group, an ethoxy group, a propoxy group, and a butoxy group; substituted alkoxy groups, such as a 2-methoxyethoxy group and a 2-ethoxyethoxy group; an enoxy group, such as an isopropenoxy group, a ketoximato group, such as a methylethylketoxime group, and an acetoxy group, and the hydrolyzable groups may be the same or different. The individual hydrolyzable groups may be bonded to the same silicon atom, or may be bonded to different silicon atoms. For example, a compound having a structure such that hydroxyl groups or hydrolyzable groups bonded to a Si atom are connected through a siloxane bond can be used as a crosslinking agent. Each group bonded to the silicon atom other than the hydrolyzable group can be independently a monovalent organic group. The monovalent organic group is preferably a hydrocarbon group because the corresponding silicon compound is easily available, especially preferably a methyl group, a vinyl group, or a phenyl group.

As a more specific example of component (b), there can be mentioned an organosilicon compound represented by the following formula (2):

$$R^1_aSi(OR^2)_{4-a} \qquad (2)$$

wherein each $R^1$ is independently a substituted or unsubstituted monovalent hydrocarbon group, each $R^2$ is independently a hydrogen atom or a monovalent organic group, and a is 0, 1, or 2 or a partial hydrolysis condensation product thereof. Each $R^2$ is independently a hydrogen atom or a monovalent organic group. The monovalent organic group means a group containing monovalent carbon. With respect to the monovalent organic group, there is no particular limitation, but examples include monovalent hydrocarbon groups. The hydrocarbon group has the same meanings as mentioned above.

Each $R^1$ is preferably independently a substituted or unsubstituted monovalent hydrocarbon group having 1 to 12 carbon atoms. Specific examples of $R^1$'s include alkyl groups, such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, and a decyl group; cycloalkyl groups, such as a cyclopentyl group, a cyclohexyl group, and a cycloheptyl group; aryl groups, such as a phenyl group, a tolyl group, a xylyl group, and a naphthyl group; aralkyl groups, such as a benzyl group, a phenylethyl group, and a phenylpropyl group; alkenyl groups, such as a vinyl group, an allyl group, a propenyl group, and a butenyl group; alkynyl groups, such as an ethynyl group and a propynyl group; and groups obtained by replacing part of or all of hydrogen atoms of the above hydrocarbon group by a halogen atom, such as fluorine, chlorine, or bromine (for example, a chloromethyl group, a bromoethyl group, a chloropropyl group, a trifluoropropyl group, and a 3,3,4,4,5,5,6,6,6-nonafluorohexyl group). In view of easy availability and obtaining excellent crosslinking reaction rate, $R^1$ is preferably a methyl group or a vinyl group.

Each $R^2$ is independently a hydrogen atom or a monovalent organic group. With respect to the monovalent organic group, there is no particular limitation, but examples include monovalent hydrocarbon groups. The hydrocarbon group has the same meanings as mentioned above. $R^2$ is preferably $CH_3$-, $C_2H_5$-, $C_3H_7$-, $CF_3CH_2$-, $CH_3CO$-,

$CH_2=C(CH_3)-$, $CH_3CH_2C(CH_3)=N-$, $(CH_3)_2N-$, $(C_2H_5)_2N-$, $CH_2=C(OC_2H_5)-$, $(CH_3)_2C=C(OC_8H_{17})-$, or

[Chemical formula 1]

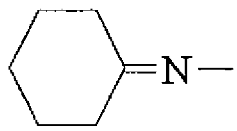

, more preferably $CH_3-$ or $C_2H_5-$.

a is preferably 1 or 2.

The crosslinkable group of component (b) may be bonded to the same silicon atom as shown in the formula above, but may be bonded to different silicon atoms. For example, a compound having a structure such that two structures each composed of the $OR^2$ group bonded to silicon are connected through a divalent organic group can also be used as component (b). The divalent organic group may be a divalent group composed of a siloxane bond, or a divalent hydrocarbon group. Specific examples of divalent hydrocarbon groups include alkylene groups, such as a methylene group, an ethylene group, a propylene group, a methylethylene group, a butylene group, and a hexamethylene group; cycloalkylene groups, such as a cyclohexylene group; arylene groups, such as a phenylene group, a tolylene group, a xylylene group, a naphthylene group, and a biphenylene group; groups obtained by replacing part of or all of hydrogen atoms of the above hydrocarbon group by, for example, a halogen atom; and a combination of the above substituted or unsubstituted alkylene groups and arylene groups. Of these, with respect to the divalent hydrocarbon group, preferred are a methylene group, an ethylene group, a propylene group, a butylene group, a hexamethylene group, a cyclohexylene group, and a phenylene group, and especially preferred are an ethylene group, a propylene group, a butylene group, and a phenylene group.

Component (b) can be a cyclic siloxane having two or more $R^2$ groups. In this case, $R^2$ group may be or may not be directly bonded to the silicon atom forming the siloxane ring. The cyclic siloxane is preferably a 6- to 10-membered ring, more preferably an 8-membered ring. That is, it is preferred that a ring containing 3 to 5 units composed of Si-O, particularly 4 units, is formed.

In a preferred embodiment, examples of component (b) include alkoxy group-containing compounds, such as tetramethoxysilane, methyltrimethoxysilane, vinyltrimethoxysilane, phenyltrimethoxysilane, tetraethoxysilane, methyltriethoxysilane, vinyltriethoxysilane, phenyltriethoxysilane, tetrapropoxysilane, tetraisopropoxysilane, dimethyldimethoxysilane, vinylmethyldimethoxysilane, dimethyldiethoxysilane, and 3-chloropropyltrimethoxysilane as well as a partial hydrolysis condensation product thereof; substituted alkoxy group-containing compounds, such as tetrakis(2-ethoxyethoxy)silane, methyltris(2-methoxyethoxy)silane, vinyl(2-ethoxyethoxy)silane, and phenyltris(2-methoxyethoxy)silane as well as a partial hydrolysis condensation product thereof; enoxy group-containing compounds, such as methyltripropenoxysilane, methyltriisopropenoxysilane, vinyltriisopropenoxysilane, phenyltriisopropenoxysilane, dimethyldiisopropenoxysilane, and methylvinyldiisopropenoxysilane as well as a partial hydrolysis condensation product thereof; and acyloxy group-containing compounds, such as methyltriacetoxysilane and a partial hydrolysis condensation product thereof.

It is preferred that component (b) does not have another reactive functional group in view of the crosslinking properties, but component (b) may have a reactive functional group other than the crosslinkable group. Such a crosslinking agent not only contributes to a crosslinking reaction (condensation reaction) but also can function as an adhesion imparting agent. Examples of other reactive functional groups include a primary amino group, an epoxy group, (a)an (meth)acryloyl group, (a)an (meth)acryloxy group, a mercapto group, and an isocyanate group.

Examples of crosslinking agents having a reactive functional group other than the crosslinkable group for component (a) include substituted or unsubstituted amino group-containing silanes, such as 3-aminopropyltrimethoxysilane, 3-aminopropyltriethoxysilane, 3-aminopropyltriisopropoxysilane, 3-aminopropyltriacetoamidosilane, N-(2-aminoethyl)-3-aminopropyltrimethoxysilane, N-(2-aminoethyl)-3-aminopropyltriethoxysilane, N-methyl-3-aminopropyltrimethoxysilane, N-phenyl-3-aminopropyltrimethoxysilane, and N,N-dimethyl-3-aminopropyltrimethoxysilane; epoxy group-containing silanes, such as 3-glycidoxypropyltrimethoxysilane, 3-glycidoxypropyltriethoxysilane, 3-glycidoxypropylmethyldimethoxysilane, and 3,4-epoxycyclohexylethyltrimethoxysilane; isocyanato group-containing silanes, such as 3-isocyanatopropyltrimethoxysilane, 3-isocyanatopropyltriethoxysilane, and 3-isocyanatopropylmethyldimethoxysilane; isocyanurate compounds, such as tris(3-trialkoxysilylpropyl) isocyanurate, e.g., tris(3-trimethoxysilylpropyl) isocyanurate and tris(3-triethoxysilylpropyl) isocyanurate; a silane compound having a carbasilatrane skeleton, which is obtained by replacing oxygen of silatrane by one carbon; (meth)acryloxy group-containing silanes, such as 3-acryloxypropyltrimethoxysilane, 3-methacryloxypropyltrimethoxysilane, 3-acryloxypropylmethyldimethoxysilane, 3-methacryloxypropylmethyldimethoxysilane, and 3-methacryloxypropylmethyldiethoxysilane; mercapto group-containing silanes, such as 3-mercaptopropyltrimethoxysilane; and a mixture of or reaction product of a primary amino group-containing silane and an

epoxy group-containing silane.

«Crosslinking agent which causes an addition reaction»

When component (a) has an unsaturated group, such as a vinyl group, as a curable functional group, as an example of the crosslinkable group of component (b), there can be mentioned a Si-H bond. As a crosslinking agent having such a crosslinkable group, a hydrogenpolyorganosiloxane which is a siloxane containing a hydrogen group is used. The hydrogenpolyorganosiloxane is a siloxane compound having a Si-H bond, and is a component which serves as a crosslinking agent. The hydrogenpolyorganosiloxane representatively has in the molecule thereof two or more units represented by the following formula (3):

$$(R^b)_x(R^c)_ySiO_{(4-x-y)/2} \qquad (3)$$

wherein:

$R^b$ is a hydrogen atom,
$R^c$ is a $C_{1-6}$ alkyl group (for example, methyl, ethyl, propyl, butyl, pentyl, or hexyl, preferably methyl) or a phenyl group;
x is 1 or 2; and
y is an integer of 0 to 2, with the proviso that x + y is 1 to 3.

Examples of siloxane skeletons in the hydrogenpolyorganosiloxane include those which are cyclic, branched, or linear, and preferred is a cyclic or linear skeleton, and more preferred is a linear skeleton. The main chain of the hydrogenpolyorganosiloxane is preferably of a linear skeleton, but may be of a skeleton having a branched structure as a substituent. Further, it is necessary that the number of hydrogen groups bonded to the silicon atom contained per molecule (i.e., which are equivalent to Si-H bonds) be at least 3 or more, but an average of the number of above hydrogen groups per molecule is preferably 5 or more, more preferably 8 or more. In the hydrogenpolyorganosiloxane, with respect to the other conditions, organic groups other than a hydrogen group, bonding position, polymerization degree, structure and others, there is no particular limitation, but, when the hydrogenpolyorganosiloxane has a linear structure, the polymerization degree is preferably in the range of from 10 to 100, especially preferably 15 to 70, because the obtained composition is likely to be further improved in the handling properties. Specific examples of the usable hydrogenpolyorganosiloxanes include a hydrogenpolyorganosiloxane having a linear skeleton which contains 8 or more units ($M^H$ or $D^H$ units) having a Si-H bond, and which has a polymerization degree in the range of from 15 to 70.

The amount of the hydrogenpolyorganosiloxane incorporated is preferably an amount such that the number of the hydrogen atoms directly bonded to a silicon atom becomes 0.7 to 5.0, relative to one curable functional group of component (a), particularly one unsaturated group, such as a vinyl group. When the number of the hydrogen atoms is less than 0.7, it is likely that curing does not proceed at a satisfactory rate, and, when the number of the hydrogen atoms is more than 5.0, it is likely that the resultant cured product becomes too hard, and further the physical properties of the composition after cured are adversely affected. When the curable functional group is a vinyl group, the amount of the polyorganosiloxane having one vinyl group in the molecule thereof can also be controlled by appropriately selecting the mass ratio of the Si-H bond in the hydrogenpolyorganosiloxane to the unsaturated bond, particularly a vinyl group (HIVi ratio). The H/Vi ratio is preferably in the range of from 0.7 to 2.0, more preferably in the range of from 0.8 to 1.5. When the H/Vi ratio is 0.7 or more, curing at a satisfactory rate can be achieved, and excessive bleeding can be suppressed. Further, when the H/Vi ratio is 2.0 or less, the composition is cured using a satisfactory amount of the polyorganosiloxane, making it possible to maintain an appropriate hardness.

In an embodiment, the molecular weight of crosslinking agent (b) is 1,000 or less, preferably 600 or less, more preferably 250 or less. The lower limit of the molecular weight of the crosslinking agent may be 90 or more, and may be 120 or more.

With respect to component (b), only one member may be used as long as it has a crosslinkable group having reactivity with the reactive functional group of component (a), or two or more members may be used at the same time as long as they can cause a reaction of the same type.

In the curable composition, relative to 100 parts by mass of component (a), crosslinking agent (b) can be contained in an amount of, for example, 0.1 part by mass or more, specifically 0.3 part by mass or more, and can be contained in an amount of 30 parts by mass or less, specifically 20 parts by mass or less, more specifically 10 parts by mass or less.

From the viewpoint of the crosslinking properties, the total content of component (b) to component (a) is preferably 0.1% by mass or more, more preferably 0.3% by mass or more, and preferably 30% by mass or less, more preferably 20% by mass or less, especially preferably 10% by mass or less.

In the curable composition, component (b) can contain a crosslinkable group in an amount of, for example, 1

mol or more, specifically, 2 mol or more, relative to 1 mol of the reactive functional group of component (a). Component (b) can contain a crosslinkable group in an amount of, for example, 30 mol or less, specifically, 20 mol or less, more specifically, 10 mol or less, relative to 1 mol of the reactive functional group of component (a).

Component (b) can contain a crosslinkable group in an amount of, for example, in the range of from 1 to 30 mol, specifically, in the range of from 2 to 20 mol, relative to 1 mol of the reactive functional group of component (a).

• Component (c)

The curing catalyst in the curable composition of the present invention is a compound capable of catalyzing a crosslinking reaction of the above-mentioned component (a) and component (b) (hereinafter, frequently referred to simply as "component (c)"). When the crosslinking reaction of component (a) and component (b) is a condensation reaction, a catalyst known as a condensation catalyst can be used, and, when the crosslinking reaction of component (a) and component (b) is an addition reaction, an addition curing catalyst can be used.

«Condensation catalyst»

The condensation catalyst as component (c) is a component for accelerating a hydrolysis condensation of the above-mentioned component (a) and component (b). As the condensation catalyst, for example, a metal catalyst, an organic acid catalyst, an inorganic acid catalyst, or a base catalyst can be used. From the viewpoint of the curing rate of the composition, the condensation catalyst is preferably a metal catalyst.

With respect to the metal atom contained in the metal catalyst, for example, there can be mentioned titanium, zirconium, and tin. Particularly, an organotin compound or an alkoxytitanium is preferred. As one mode of the metal catalyst, a compound having an alkoxide as a ligand, preferably an alkoxide having 1 to 4 carbon atoms, further preferably having 1 to 3 carbon atoms, can be used. When using such a catalyst, the catalyst is easily dissolved or dispersed in the curable composition to contribute to acceleration of a uniform condensation reaction.

Examples of preferred metal catalysts include carbonic acid metal salts, such as iron octoate, manganese octoate, zinc octoate, tin naphthate, tin caprylate, and tin oleate; organotin compounds, such as dibutyltin diacetate, dibutyltin dioctoate, dibutyltin dilaurate, dibutyltin dioleate, diphenyltin diacetate, dibutyltin oxide, dibutyltin dimethoxide, dibutylbis(triethoxysiloxy)tin, dioctyltin dilaurate, and dimethyltin dineodecanoate; organotitaniums, such as tetraethoxytitanium, tetrapropoxytitanium, tetraisopropoxytitanium, tetra-n-butoxytitanium, tetraisobutoxytitanium, diisopropoxytitanium bis(ethylacetoacetate), and 1,3-propanedioxytitanium bis(ethylacetoacetate); organoaluminums, such as aluminum trisacetylacetonate, aluminum trisethylacetoacetate, diisopropoxyaluminum ethylacetoacetate, and triethoxyaluminum; and organozirconium compounds, such as zirconium tetraacetylacetonate, tetraisopropoxyzirconium, tetrapropoxyzirconium, tetra-n-butoxyzirconium, tetraisobutoxyzirconium, tributoxyzirconium acetylacetonate, and tributoxyzirconium stearate.

With respect to the organic acid catalyst, for example, there can be mentioned compounds having a carboxylic acid, sulfonic acid, or phophoric acid, and specific examples include acetic acid, trifluoroacetic acid, methanesulfonic acid, toluenesulfonic acid, and an alkylphophoric acid. With respect to the inorganic acid catalyst, for example, there can be mentioned hydrochloric acid and sulfuric acid.

Examples of the base catalysts include amine compounds, such as ammonia, triethylamine, and diethylamine, dialkylhydroxyamines, such as dimethylhydroxyamine and diethylhydroxyamine, and guanidyl compounds, such as tetramethylguanidine and guanidyl group-containing silane or siloxane.

In the curable composition of the present invention, the condensation catalyst is preferably contained in an amount of 0.01 to 10.0 parts by mass, more preferably 0.03 to 5.0 parts by mass, relative to 100 parts by mass of component (a).

The condensation catalysts may be used individually or in combination at the same time.

<<Addition curing catalyst>>

When the combination of components (a) and (b) causes a crosslinking reaction due to an addition reaction, an addition curing catalyst is used as the curing catalyst. As a representative example of such a curing catalyst, there can be mentioned a platinum catalyst. The platinum catalyst is a curing catalyst for reacting the curable functional group of component (a) with the hydrogen group of component (b) to obtain a cured product. Examples of platinum compounds include chloroplatinic acid, a platinum-olefin complex, a platinum-vinylsiloxane complex, a platinum-phosphorus complex, a platinum-alcohol complex, and platinum black. The amount of the platinum catalyst incorporated is 0.1 to 1,000 ppm, in terms of a platinum element, based on component (a). When the amount of the platinum catalyst is smaller than 0.1 ppm, the composition is not satisfactorily cured, and, even when the amount of the platinum catalyst is more than 1,000 ppm, the curing rate cannot be particularly expected to be improved. Further, according to the use of the composition,

for obtaining a longer pot life, addition of a reaction inhibitor can suppress the activity of the catalyst. Examples of reaction inhibitors for known platinum group metals include acetylene alcohols, such as 2-methyl-3-butyn-2-ol and 1-ethynyl-2-cyclohexanol, and diallyl maleate.

• Component (d)

In the curable composition of the present invention, a pigment is contained as a coloring agent (hereinafter, frequently referred to simply as "component (d)"). With respect to the pigment, any known pigment can be used as long as it is a colored inorganic material or organic material which does not have reactivity with the other components contained in the curable composition of the present invention, and which is generally handled as a pigment. The term "colored" means that absorption or scattering of at least part of a visible light occurs, that is, it is not transparent. The pigment may be one which is derived from a natural substance, or may be one which is artificially synthesized or prepared. The pigment itself does not emit a fluorescent light.

Specific examples of pigments include carbon black (black), titanium oxide, zinc white, white lead, barium sulfate (white), minium, iron oxide (red), chrome yellow, zinc yellow (yellow), and Prussian blue (blue). These pigments can be used individually or in combination. The type of the pigment is selected in connection with the substrate to which the composition is applied, but is preferably selected from the group consisting of carbon black, titanium oxide, iron oxide, and a mixture thereof.

With respect to the amount of the pigment contained, there is no particular limitation as long as the pigment can be uniformly mixed into the composition, and the color of the composition, particularly lightness can be controlled by the concentration of the pigment. In the curable composition of the present invention, the amount of the pigment contained is preferably 0.01 to 10 parts by mass, more preferably 0.1 to 5 parts by mass, relative to 100 parts by mass of component (a).

• Component (e)

The curable composition of the present invention contains a UV tracer (hereinafter, frequently referred to simply as "component (e)"). The UV tracer is a compound which absorbs an ultraviolet light to emit a fluorescent light. With respect to the UV tracer, preferred is a colorless compound which absorbs a light having a wavelength shorter than 440 nm to emit a fluorescent light, particularly a fluorescent light of a blue to violet color. As the UV tracer, there can be used a generally known compound, for example, a benzoxazole derivative, such as 2,5-thiophenediylbis(5-tert-butyl-1,3-benzoxazole), a stilbene derivative, an imidazole derivative, a coumarin derivative, or a fluorescein derivative, such as Rhodamine. As an example of a specific commercially available compound of UV tracer, there can be mentioned Tinopal OB, manufactured by BASF Japan Ltd.

In the curable composition of the present invention, the amount of component (e) added is preferably 0.001 to 1 part by mass, more preferably 0.005 to 0.1 part by mass, relative to 100 parts by mass of component (a). When the amount of component (e) added is much smaller than 0.001 part by mass, relative to 100 parts by mass of component (a), it is likely that fluorescence generated by irradiating the composition with an ultraviolet light is not satisfactory, making it difficult to check the state of the composition applied.

[Curable polyorganosiloxane composition]

The curable polyorganosiloxane in the present invention contains the above-mentioned component (a) or (e). Particularly, the polyorganosiloxane composition can be classified into a moisture curing type and an addition curing type according to the curing method.

(Polyorganosiloxane composition of a moisture curing type)

The polyorganosiloxane composition of a type such that the composition is cured due to moisture (water) is the composition which has a polyorganosiloxane having a curable functional group which causes a condensation reaction as component (a), a compound having at least two hydroxyl groups or hydrolyzable groups bonded to a Si atom as component (b), and a condensation catalyst as component (c).

Particularly, as an example, there can be mentioned the curable polyorganosiloxane composition wherein the component (a) is a polyorganosiloxane having per molecule two or more hydroxyl groups and/or alkoxy groups, the component (b) is a silane represented by the formula: $R^1_aSi(OR^2)_{4-a}$ (wherein each $R^1$ is independently a monovalent organic group, each $R^2$ is independently a hydrogen atom or a monovalent organic group, and a is 0, 1, or 2) or a hydrolysis condensation product thereof, and the component (c) is a condensation catalyst.

(Polyorganosiloxane composition of an addition curing type)

The polyorganosiloxane composition of a type such that the composition is cured due to an addition reaction for an unsaturated bond is the composition which has a polyorganosiloxane having a curable functional group which causes an addition reaction as component (a), a polyorganohydrogensiloxane as component (b), and a platinum catalyst as component (c).

Particularly, as an example, there can be mentioned the curable polyorganosiloxane composition wherein the component (a) is a polyorganosiloxane having two or more alkenyl groups per molecule, the component (b) is a hydrogenpolyorganosiloxane having per molecule three or more hydrogen atoms bonded to a silicon atom, and the component (c) is a platinum compound.

With respect to the appearance of the polyorganosiloxane composition of the present invention, there is no particular limitation as long as the components of the composition are uniformly mixed with each other and the composition has such fluidity that the composition can be applied to a substrate. The viscosity of the polyorganosiloxane composition can be controlled mainly by the viscosity of component (a), and is preferably in the range of from 0.1 to 100 Pa•s from the viewpoint of the operation properties. Further, the polyorganosiloxane composition is preferably a one-part type composition in the state in which all the components are mixed together. With respect to the one-part type composition, for preventing the composition which is being stored from suffering curing, the composition can be stored in a dry state, or a reaction inhibitor can be added to the composition, and these methods are known to those skilled in the art.

In the curable polyorganosiloxane composition of the present invention, any known additional component can be incorporated into the composition as long as the object of the present invention and curing of the composition are not sacrificed. As an additive, for example, a flame retardant, a filler, an adhesion imparting agent, a heat-resistance imparting agent, a diluent, or an organic solvent can be appropriately incorporated into the composition. Further, a siloxane resin which does not correspond to the above-mentioned component (a) can be incorporated into the composition. Examples of such resins include a polyorganosiloxane having only one curable functional group, and a polyorganosiloxane having no curable functional group, such as dimethylsiloxane. Among these resins, the resin having no reactivity can be used as a diluent.

<Filler>

The curable polyorganosiloxane composition may further contain a filler. Examples of fillers include oxides, such as fumed silica, calcined silica, silica aerogel, precipitated silica, diatomaceous earth, ground silica, fused silica, a quartz powder, fumed titanium oxide, iron oxide, zinc oxide, titanium oxide, and aluminum oxide; the above oxides having the surface treated by a hydrophobicity imparting agent, such as trimethylchlorosilane, dimethyldichlorosilane, hexamethyldisilazane, or octamethylcyclotetrasiloxane; carbonates, such as calcium carbonate, magnesium carbonate, and zinc carbonate; silicates, such as aluminosilicate and calcium silicate; talc; composite oxides, such as glass wool and a mica fine powder; conductive fillers, such as carbon black, a copper powder, and a nickel powder; synthetic resin powders, such as polymethylsilsesquioxane, polystyrene, polyvinyl chloride, and polypropylene; and fibrous fillers, such as asbestos, a glass fiber, and an organic fiber. These fillers are selected according to the working properties for application and the physical properties required for the elastomer obtained after curing.

When the filler is a filler in a particle form, from the viewpoint of the dispersibility of the filler, fluidity of the curable composition, and high mechanical strength of the cured product, the filler preferably has an average particle diameter of 100 μm or less, more preferably 50 μm, especially preferably 10 μm or less. The measured value of the average particle diameter is a median diameter (d50) as measured by a laser diffraction-scattering method.

In the curable polyorganosiloxane composition, relative to 100 parts by mass of component (a), the filler can be contained in an amount of, for example, 200 parts by mass or less, specifically, 1 to 100 parts by mass, more specifically, 1 to 50 parts by mass.

<Adhesion imparting agent>

The curable polyorganosiloxane composition may further contain an adhesion imparting agent. The adhesion imparting agent is a component for improving the adhesion of a cured product of the composition to a substrate, such as glass, a metal, or a plastic. A compound having a functional group other than the hydrolyzable group of the above-mentioned crosslinking agent also can be used as an adhesion imparting agent. Specific examples include an amino group-containing silane, an isocyanurate, and a carbasilatrane compound. Further specific examples include vinyltrimethoxysilane, vinyltriethoxysilane, 3-glycidoxypropyltrimethoxysilane, 3-glycidoxypropyltriethoxysilane, 3-glycidoxypropylmethyldimethoxysilane, 3,4-epoxycyclohexylethyltrimethoxysilane, 3-acryloxypropyltrimethoxysilane, 3-methacryloxypropyltrimethoxysilane, 3-acryloxypropylmethyldimethoxysilane, 3-methacryloxypropylmethyldimethoxysilane, and 3-methacryloxypropylmethyldiethoxysilane.

In the curable polyorganosiloxane composition, relative to 100 parts by mass of component (a), the adhesion imparting agent can be contained in an amount of, for example, 10 parts by mass or less, specifically, 0.01 to 10 parts by mass, more specifically, 0.1 to 5 parts by mass.

<Other resins>

The curable polyorganosiloxane composition may further contain a siloxane resin which does not correspond to the above-mentioned components (a) and (b). Such a resin can be used also as a diluent for controlling the viscosity. With respect to the siloxane resin, a siloxane having only one curable functional group and being represented by the following formula (4):

$$(R^a)_{3-p}R_pSi\text{-}O\text{-}(SiR_2O)_n\text{-}SiR_3 \cdots \qquad (4)$$

wherein $R^a$, R, p, and n are as defined above for the formula (1),
or a siloxane having no curable functional group and being represented by the following formula (5):

$$R_3Si\text{-}O\text{-}(SiR_2O)_n\text{-}SiR_3 \cdots \qquad (5)$$

wherein R and n are as defined above for the formula (1)
can be used. By using such a siloxane resin, the hardness of the cured product of the curable polyorganosiloxane composition can be controlled, or the viscosity of the composition can be controlled, making it possible to widely deal with the handling properties and required physical properties.

In the curable polyorganosiloxane composition, relative to 100 parts by mass of component (a), such a resin can be contained in an amount of, for example, 50 parts by mass or less, specifically, 0.1 to 50 parts by mass, more specifically, 1 to 30 parts by mass.

<Solvent>

The curable polyorganosiloxane composition may contain a solvent. In this case, the curable polyorganosiloxane composition can be used in the form of being dissolved in an appropriate solvent at a desired concentration according to the use and object of the composition. The concentration of the solvent, for example, relative to 100 parts by mass of the curable polyorganosiloxane composition, may be 80 parts by mass or less, may be 50 parts by mass or less, may be 30 parts by mass or less, and may be 20 parts by mass or less. From the viewpoint of controlling the viscosity of the curable composition, the curable composition preferably contains a solvent. When containing a solvent, the handling properties of the curable composition can be improved. Further, a cured product formed from the curable composition can be easily controlled in the shape, and, for example, a cured product having an increased thickness can be easily formed.

The curable polyorganosiloxane composition of the present invention contains a pigment and therefore is colored. As mentioned above, there is no particular limitation with respect to the type of the pigment, but the composition can be designed so as to contain a pigment having a color similar to that of a substrate to which the composition is applied. Particularly, the composition contains a pigment such that a color difference (ΔE) between the pigment and a substrate to which the composition is applied is small.

The "color difference" is a difference between two colors, which is a quantitatively determined distance in the color space, and is determined from a distance of the color coordinates in the L*a*b* color order system. With respect to the color difference (ΔE) between the composition and the substrate in the L*a*b* color order system, when the respective values of the substrate in the L*a*b* color order system are taken as L*(b), a*(b), and b*(b), and the respective values of the composition in the L*a*b* color order system are taken as L*(c), a*(c), and b*(c), the color difference (ΔE) can be determined from the following formula:

$$\Delta E = \{(L^*(b) - L^*(c))^2 + (a^*(b) - a^*(c))^2 + (b^*(b) - b^*(c))^2\}^{1/2}$$

In the formula, L* is a parameter for lightness (0 to 100) of the color, a* is a parameter for red-green coordinate (-128 to +128) of the color, and b* is a parameter for yellow-blue coordinate (-128 to +128) of the color.

The method for quantitatively determining a color difference is known to those skilled in the art, and a color difference can be quantitatively determined using a generally available spectroscopic color difference meter or colorimetric color difference meter.

The color difference (ΔE) between the curable polyorganosiloxane composition and the substrate may be larger than 20, but is preferably 20 or less because more remarkable effects of the present invention can be obtained. In the case where both the curable polyorganosiloxane composition and the substrate use the same pigment, when the components other than the pigment are colorless and transparent and a difference in the pigment concentration between the composition and the substrate is not large, the color difference can be presumed to be 20 or less. Even in the case where the substrate and the composition use different pigments, when it is impossible or difficult to confirm by visual observation the boundary between the substrate and the composition which are arranged in contact with each other, the color difference can be presumed to be 20 or less.

[Substrate]

With respect to the material for the substrate to which the curable polyorganosiloxane composition of the present invention is applied, there is no particular limitation. As the substrate, there can be used, for example, a metal, such as aluminum, copper, nickel, iron, brass, or stainless steel; an engineering plastic, such as an epoxy resin, a polyester resin, e.g., a polyethylene terephthalate or polybutylene terephthalate (PBT) resin, a polycarbonate resin, an acrylic resin, a polyimide resin, a phenolic resin, a polyamide resin, a polyphenylene sulfide (PPS) resin, or a modified polyphenylene ether (PPE) resin; or glass. Further, if necessary, for example, a wall surface with voids may be subjected to primer treatment according to a general method. Preferred is a plastic material into which a pigment can be easily mixed for obtaining a substrate having a color similar to that of the curable polyorganosiloxane composition.

As a method for applying the curable polyorganosiloxane composition to a substrate, a method known to those skilled in the art, such as a dipping method, a brushing method, a spraying method, or a dispensing method, can be used. Further, the composition applied generally has a thickness of 0.01 to 3 mm, preferably 0.05 to 2 mm.

An embodiment of the present invention is directed to a method for checking the state of the curable polyorganosiloxane composition applied to a substrate, wherein the method comprises the steps of:

(A) providing the above-mentioned curable polyorganosiloxane composition;
(B) providing a substrate in which a color difference (ΔE) between the composition and the substrate is 20 or less;
(C) applying the composition to the substrate; and
(D) irradiating the composition applied to the substrate with an ultraviolet light.

By step (D) of irradiating the composition with an ultraviolet light, the state of the composition applied can be easily checked by visual observation. The step of irradiating the composition with an ultraviolet light comprises irradiating the surface of the composition with an ultraviolet light having a wavelength of 280 to 440 nm, preferably 300 to 420 nm, especially preferably 340 to 400 nm, by means of an ultraviolet light irradiation apparatus. As the ultraviolet light irradiation apparatus, a black light which can be generally used, and which is commercially available may be used. By irradiating the composition with an ultraviolet light and observing fluorescence from the surface of the composition, the state of the composition applied to the substrate can be checked by visual observation.

The method of the present invention is a method comprising at least the above-mentioned steps (A) to (D), and may comprise the step of curing the composition after step (C) or (D). The method employed for curing the composition varies depending on components (a) and (b) in the composition. For example, when component (a) has a hydrolyzable group as a curable functional group, the composition can be cured due to water in air. In this case, typically, the composition is placed in an environment at room temperature (23°C) and at a relative humidity of 50% for 1 to 72 hours, so that water in air causes a hydrolysis reaction to proceed, making it possible to cure the composition. When component (a) has a group containing an unsaturated bond as a curable functional group, the composition can be cured by heating to room temperature to 150°C.

When the state of the composition applied to a member is checked using the method of the present invention, the resultant member is effectively used in electric and electronic parts. Particularly, the method of the present invention is effective in parts that require the composition to have light screen properties and hiding properties, which parts are generally colored by a pigment, and the method of the present invention is advantageously used in the production of these parts.

Examples

The composition and method of the present invention will be described in more detail with reference to the following Examples, but the embodiments in the following Examples should not be construed as limiting the scope of the present invention.

[Example 1] Black polyorganosiloxane composition

100 Parts by mass of methyldimethoxy-terminated polydimethylsiloxane (viscosity: 20 Pas) as a base polymer (component (a)), 1.1 parts by mass of methyltrimethoxysilane as a crosslinking agent (component (b)), 0.44 part by mass of 3-aminopropyltrimethoxysilane and 0.66 part by mass of tris[3-(trimethoxysilyl)propyl] isocyanurate as a crosslinking agent which also serves as an adhesion imparting agent, 0.38 part by mass of dibutyltin dilaurate as a catalyst (component (c)), 0.5 part by mass of carbon black as a pigment (component (d)), 0.013 part by mass of 2,5-thiophenediylbis(5-tert-butyl-1,3-benzoxazole) as a UV tracer (component (e)), and further 14 parts by mass of fumed silica as a filler and 18 parts by mass of dimethylsiloxane (viscosity: 0.1 Pas) as a diluent were mixed using a planetary mixer to obtain a black polyorganosiloxane composition in the form of a uniform composition.

[Comparative Example 1] Black polyorganosiloxane composition

A black polyorganosiloxane composition was obtained in substantially the same manner as in Example 1 except that 2,5-thiophenediylbis(5-tert-butyl-1,3-benzoxazole) as a UV tracer was not added.

[Example 2] White polyorganosiloxane composition

A white polyorganosiloxane composition was obtained in substantially the same manner as in Example 1 except that the pigment was changed from carbon black to 1.0 part by mass of titanium dioxide.

[Comparative Example 2] White polyorganosiloxane composition

A white polyorganosiloxane composition was obtained in substantially the same manner as in Example 2 except that 2,5-thiophenediylbis(5-tert-butyl-1,3-benzoxazole) as a UV tracer was not added. The formulations of the compositions in Examples 1 and 2 and Comparative Examples 1 and 2 are shown in Table 1.

[Table 1

| | | Example 1 | Comparative Example 1 | Example 2 | Comparative Example 2 |
|---|---|---|---|---|---|
| (A) | Methyldimethoxy-terminal polydimethylsiloxane (20 Pas) | 100 | 100 | 100 | 100 |
| (B) | Methyltrimethoxysilane | 1.1 | 1.1 | 1.1 | 1.1 |
| | 3-Aminopropyltrimethoxysilane (Adhesion imparting agent) | 0.44 | 0.44 | 0.44 | 0.44 |
| | Tris[3-(trimethoxysilyl)propyl] isocyanurate (Adhesion imparting agent) | 0.66 | 0.66 | 0.66 | 0.66 |
| (C) | Dibutyltin dilaurate | 0.38 | 0.38 | 0.38 | 0.38 |
| (D) | Carbon black | 0.5 | 0.5 | - | - |
| | Titanium dioxide | - | - | 1.00 | 1.00 |
| (E) | 2,5-Thiophenediylbis(5-tert-butyl-1,3-benzoxazole) | 0.013 | - | 0.013 | - |
| Filler | Fumed silica | 14 | 14 | 14 | 14 |
| Diluent | Dimethylsiloxane (0.1 Pas) | 18 | 18 | is | 18 |

[Example 3 and Comparative Example 3]

With respect to the composition of a type such that the composition is cured due to an addition reaction, the components with the formulation shown in Table 2 below were mixed in the same manner as in Example 1 to obtain a gray polyorganosiloxane composition in the form of a uniform composition. The formulation in Comparative Example 3 is substantially the same as that in Example 3 except that 2,5-thiophenediylbis(5-tert-butyl-1,3-benzoxazole) as a UV tracer was not added.

[Table 2]

| | | Example 3 | Comparative Example 3 |
|---|---|---|---|
| (A) | Vinyldimethyl-terminal polydimethylsiloxane (3 Pas) | 100 | 100 |
| (B) | $MD^H_{20}D_{20}M$ | 2.4 | 2.4 |
| | 1-Ethynyl-2-cyclohexanol | 0.02 | 0.02 |
| | γ-Glycidoxytrimethoxysilane (Adhesion imparting agent) | 0.6 | 0.6 |
| (c) | Platinum-vinyl elastomer complex (2%) | 0.06 | 0.06 |
| (D) | Carbon black | 0.2 | 0.2 |
| | Titanium dioxide | 1 | 1 |
| (E) | 2,5-Thiophenediylbis(5-tert-butyl-1,3-benzoxazole) | 0.005 | - |
| Filler | Hexamethyldisilazane-treated fumed silica | 18 | 18 |

[Test for checking the state of the composition applied]

As a substrate to which each of the compositions in the Examples and Comparative Examples is applied, a polyphenylene sulfide (PPS) resin (manufactured by Polyplastics Co., Ltd.; black), a polybutylene terephthalate (PBT) resin (manufactured by Polyplastics Co., Ltd.; white), and a modified polyphenylene ether (PPE) resin (manufactured by SABIC Innovative Plastics Japan LLC.; gray) were prepared. The color coordinates of the substrates, which were measured using colorimetric color difference meter CR-400, manufactured by Konica Minolta Holdings, Inc., are shown in Table 3 below.

[Table 3]

| | PPS (Black) | PBT (White) | PPE (Gray) |
|---|---|---|---|
| L* | 28.98 | 94.09 | 77.57 |
| a* | 0.45 | -1.04 | -0.54 |
| b* | -1.54 | 3.08 | -0.92 |

The compositions obtained in Example 1 and Comparative Example 1 were individually applied to a substrate of a polyphenylene sulfide (PPS) resin (black) using a stainless steel spatula so that the applied composition had a form of 10 mm × 25 mm rectangle. The composition applied was placed in an environment at 23°C and at a relative humidity of 50% for 3 days, curing the composition. As measured for the substrate, color coordinates of the composition were measured using a colorimetric color difference meter, and a color difference between the composition and the substrate was determined. With respect to the compositions in Examples and Comparative Examples 1 to 3, the color coordinates and the color difference between the composition and the substrate for application are shown in Table 4. Then, the substrate was irradiated with room lighting (fluorescent lighting) and a UV light (wavelength: 375 nm). In this instance, evaluation was made to check whether the boundary between the cured product and the substrate can be seen by visual observation, and the result was indicated according to the criteria "Easy" and "Difficult".

The compositions obtained in Example 2 and Comparative Example 2 were individually applied to a substrate of a polybutylene terephthalate (PBT) resin (white), and the same test as that for Example 1 was conducted.

The compositions obtained in Example 3 and Comparative Example 3 were individually applied to a substrate of a modified polyphenylene ether (PPE) resin (gray), and cured in an oven at 100°C for one hour, and the same test as that for Example 1 was conducted. The results of the tests are shown in Table 4.

[Table 4]

| | | Example 1 | Comparative Example 1 | Example 2 | Comparative Example 2 | Example 3 | Comparative Example 3 |
|---|---|---|---|---|---|---|---|
| Color coordinates | L* | 21.95 | 22.04 | 94.39 | 94.66 | 78.51 | 78.65 |
| | a* | -0.18 | -0.30 | -0.41 | -0.48 | -0.72 | -1.06 |
| | b* | -0.52 | -0.27 | 0.08 | 0.20 | -2.07 | -1.05 |
| Substrate for application | | PPS (Black) | PPS (Black) | PBT (White) | PBT (White) | PPE (Gray) | PPE (Gray) |
| Color difference | ⊿E | 7.13 | 7.09 | 3.08 | 2.99 | 1.50 | 1.21 |
| Test for checking state of composition applied | | | | | | | |
| Light for irradiation | Room lighting | Difficult | Difficult | Difficult | Difficult | Difficult | Difficult |
| | UV Light | Easy | Difficult | Easy | Difficult | Easy | Difficult |

As apparent from Table 4, even when the composition of the present invention was applied to a substrate having a color similar to that of the composition, the site to which the composition was applied and the state of the composition applied to the substrate were able to be easily checked using an ultraviolet light.

INDUSTRIAL APPLICABILITY

The composition of the present invention is advantageous in that the state of the composition applied to a substrate having a similar color can be easily checked, and can be used as a sealing material or a coating agent for electric and electronic parts. Further, the method of the present invention can be incorporated into the method for producing electric and electronic parts using the above sealing material or coating agent, and not only can be easily utilized but also is useful in the production of parts with high reliability. The method of the present invention is useful particularly in the production of parts which require the composition to have light screen properties and hiding properties.

**Claims**

**1.** A curable polyorganosiloxane composition comprising:

(a) a polyorganosiloxane having two or more curable functional groups per molecule;
(b) a crosslinking agent having per molecule two or more crosslinkable groups having reactivity with the curable functional group of the component (a);
(c) a curing catalyst capable of catalyzing a crosslinking reaction of the component (a) and the component (b);
(d) a pigment which itself does not emit a fluorescent light; and
(e) a UV tracer.

**2.** The curable polyorganosiloxane composition according to claim 1, wherein the component (a) is a polyorganosiloxane having two or more hydroxyl groups and/or hydrolyzable groups per molecule, the component (b) is a silicon compound having two or more hydroxyl groups and/or hydrolyzable groups per molecule or a hydrolysis condensation product thereof, and the component (c) is a condensation catalyst.

**3.** The curable polyorganosiloxane composition according to claim 1, wherein the component (a) is a polyorganosiloxane having two or more alkenyl groups per molecule, the component (b) is a hydrogenpolyorganosiloxane having per molecule three or more hydrogen atoms bonded to a silicon atom, and the component (c) is a platinum compound.

**4.** The curable polyorganosiloxane composition according to any one of claims 1 to 3, which is a one-part type composition.

5. The curable polyorganosiloxane composition according to any one of claims 1 to 4, wherein the pigment (d) is selected from the group consisting of carbon black, titanium oxide, iron oxide, and a mixture thereof.

6. The curable polyorganosiloxane composition according to any one of claims 1 to 5, which is for use in boding a substrate in which a color difference (ΔE) between the composition and the substrate is 20 or less.

7. A method for checking the state of the curable polyorganosiloxane composition applied to a substrate, the method comprising the steps of:

providing the curable polyorganosiloxane composition according to any one of claims 1 to 6;
providing a substrate in which a color difference (ΔE) between the composition and the substrate is 20 or less;
applying the composition to the substrate; and
irradiating the composition applied to the substrate with an ultraviolet light.

## INTERNATIONAL SEARCH REPORT

International application No.
PCT/JP2021/020781

A. CLASSIFICATION OF SUBJECT MATTER
C08L 83/04(2006.01)i; C08K 3/04(2006.01)i; C08K 3/11(2018.01)i; C08K 3/22(2006.01)i; C08K 5/541(2006.01)i; C08L 83/06(2006.01)i; C08L 83/07(2006.01)i; C09D 7/61(2018.01)i; C09D 7/63(2018.01)i; C09D 183/05(2006.01)i; C09D 183/07(2006.01)i
FI: C08L83/04; C08K3/04; C08K3/11; C08K3/22; C08K5/541; C08L83/06; C08L83/07; C09D7/61; C09D7/63; C09D183/05; C09D183/07
According to International Patent Classification (IPC) or to both national classification and IPC

B. FIELDS SEARCHED
Minimum documentation searched (classification system followed by classification symbols)
C08K3/00-13/08;C08L1/00-101/14; C08G77/00-77/62; C09D7/61; C09D1/00-10/00;101/00-201/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 5-098163 A (DOW CORNING CORPORATION) 20 April 1993 (1993-04-20) claims, paragraphs [0008], [0012], [0014]-[0015], [0027]-[0032], [0041], examples | 1-7 |
| X<br>A | JP 2019-143074 A (SHIN-ETSU CHEMICAL CO., LTD.) 29 August 2019 (2019-08-29) claims, paragraphs [0030]-[0031], [0034]-[0035], [0042]-[0047], examples | 1-2, 5-7<br>3-4 |
| X<br>A | JP 2020-510713 A (DOW SILICONES CORPORATION) 09 April 2020 (2020-04-09) claims, paragraphs [0042]-[0043], examples | 1-2, 4-7<br>3 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 July 2021 (12.07.2021) | 20 July 2021 (20.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/020781

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2013-107984 A (SHIN-ETSU CHEMICAL CO., LTD.) 06 June 2013 (2013-06-06) claims, paragraphs [0056]-[0059], examples | 1-2, 4-5<br>3, 6-7 |
| X<br>A | JP 2016-506992 A (DOW CORNING CORPORATION) 07 March 2016 (2016-03-07) claims, examples | 1, 3-5<br>2, 6-7 |
| A | JP 2004-182758 A (SHIN-ETSU CHEMICAL CO., LTD.) 02 July 2004 (2004-07-02) entire text | 1-7 |
| A | JP 2015-172177 A (MOMENTIVE PERFORMANCE MATERIALS JAPAN LLC) 01 October 2015 (2015-10-01) entire text | 1-7 |

Form PCT/ISA/210 (continuation of second sheet) (January 2015)

**INTERNATIONAL SEARCH REPORT**
Information on patent family members

International application No.
PCT/JP2021/020781

| Patent Documents referred in the Report | Publication Date | Patent Family | Publication Date |
|---|---|---|---|
| JP 5-098163 A | 20 Apr. 1993 | (Family: none) | |
| JP 2019-143074 A | 29 Aug. 2019 | KR 10-2019-0101287 A | |
| JP 2020-510713 A | 09 Apr. 2020 | US 2020/0002535 A1<br>claims, paragraphs [0062]-[0063], examples<br>WO 2018/151450 A1<br>EP 3583155 A1<br>TW 201837120 A<br>CN 110248988 A<br>KR 10-2019-0111040 A | |
| JP 2013-107984 A | 06 Jun. 2013 | (Family: none) | |
| JP 2016-506992 A | 07 Mar. 2016 | US 2016/0009865 A1<br>claims, examples<br>WO 2014/124362 A1<br>EP 2954022 A1<br>TW 201437288 A<br>CN 104968750 A<br>KR 10-2015-0117266 A | |
| JP 2004-182758 A | 02 Jul. 2004 | US 2004/0106706 A1<br>entire text<br>EP 1424364 A1 | |
| JP 2015-172177 A | 01 Oct. 2015 | EP 3020750 A1<br>entire text<br>TW 201518416 A<br>CN 105492500 A<br>WO 2015/005247 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007169356 A
- JP 2019143074 A